# EUROPÄISCHE PATENTSCHRIFT

(11) **EP 0 950 477 B1**
(45) Veröffentlichungstag und Bekanntmachung des Hinweises auf die Patenterteilung: **27.03.2002**
(21) Anmeldenummer: 99107521.9
(22) Anmeldetag: 15.04.1999
(51) Int. Cl.: B25J 19/00, B25J 18/00

(54) **Roboterarm**
Robot arm
Bras de robot

(30) Priorität: 17.04.1998 DE 19817607
(43) Veröffentlichungstag der Anmeldung: 20.10.1999
(73) Patentinhaber: KUKA Roboter GmbH, 86165 Augsburg (DE)
(72) Erfinder: Berniger, Alwin, 86159 Augsburg (DE)
(74) Vertreter: Lempert, Jost, Dipl.-Phys. Dr. rer.nat.

(56) Entgegenhaltungen:
- EP-A- 0 407 616
- EP-A- 0 891 842
- US-A- 5 411 443

## Beschreibung

Die Erfindung betrifft einen Roboterarm, nach dem Oberbegriff des Anspruchs 1.

Bei einem Roboter sind Kabel bzw. Kabelbündel in der Regel außerhalb der Armteile geführt. Sie können dabei stören und sind äußeren Beeinträchtigungen ausgesetzt. Es wurde daher schon vorgeschlagen, die Kabel innerhalb der Armteile zu führen. Nachteilig ist einerseits, daß die Kabel hier durch die Arme bzw. deren Gehäuse eingefädelt werden müssen, andererseits bereitet der Längenausgleich Probleme. Darüber hinaus sind in Roboterarmen ausgebildeten Nuten zur Aufnahme von Kabeln an sich bekannt (EP 407 616 A1).

Der Erfindung liegt daher die Aufgabe zugrunde, einen Roboterarm derart auszubilden, daß Kabel einerseits geschützt angeordnet sind, andererseits aber in einfacher Weise in ihre geschützte Lage eingeführt werden können, wobei darüber hinaus ein seitliches Austreten des Kabels verhindert als auch die Aufnahme einer Längenreserve des Kabels ermöglicht werden soll.

Erfindungsgemäß wird die genannte Aufgabe bei einem Roboterarm der eingangs genannten Art durch die Merkmale des Anspruchs 1 gelöst.

Durch die erfindungsgemäße Ausgestaltung wird verhindert, daß das oder die Kabel unbeabsichtigt aus dem Kabelführungskanal austritt bzw. austreten, da durch die gegenüber dem Querschnitt des Kabelkanals verschmälerte seitliche Öffnung durch die letztere begrenzende Vorsprünge Hinterschneidungen bzw. Schultern gebildet werden, an denen die Kabel, insbesondere bei der S-förmigen Ausgestaltung des Kabelkanals, zumindestens lokal anliegen und daher an einem Heraustreten aus dem Kabelführungskanal gehindert werden.

Insgesamt wird durch die Erfindung eine kombinierte Innen- und Außenkabelführung geschaffen, die einen Stauraum für Kabelüberlängen im Armgehäuse aufweist, wodurch weitgehend standardisierte Kabel verwendet werden können. Darüber hinaus ist ein einfaches Einlegen und eine einfache Zugänglichkeit der Kabel, beispielsweise beim Austausch, gegeben.

In bevorzugter Ausgestaltung ist dabei vorgesehen, daß der Verlauf der seitlichen Öffnung S-förmig ausgebildet ist, wobei insbesondere der Kabelführungskanal einen flach ausgebildeten Hohlraum darstellt und damit im Kabelkanal ein Stauraum für die Kabel bzw. Kabelbündel gebildet wird.

Weitere bevorzugte Ausgestaltungen der Erfindung sehen vor, daß der Kabelführungskanal von einer Längsseite des Roboterarms zur anderen Längsseite verläuft, wobei insbesondere der Kabelführungskanal von einem vorderen Bereich der Längsseite des Roboterarms zu einem rückwärtigen Bereich der Längsseite des Roboterarms verläuft. Hiermit sind durch den Kabelkanal optimale Ein- und Austrittspunkte einerseits hinsichtlich der Kabelzuführung des Kabels von dem Sockel des Roboters und andererseits hinsichtlich der Fortführung der einzelnen Kabel zu den einzelnen Motoren, insbesondere den Handachsenmotoren des entsprechenden Roboterarms, aber auch dem den fraglichen Roboterarm schwenkenden Motor gegeben.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:

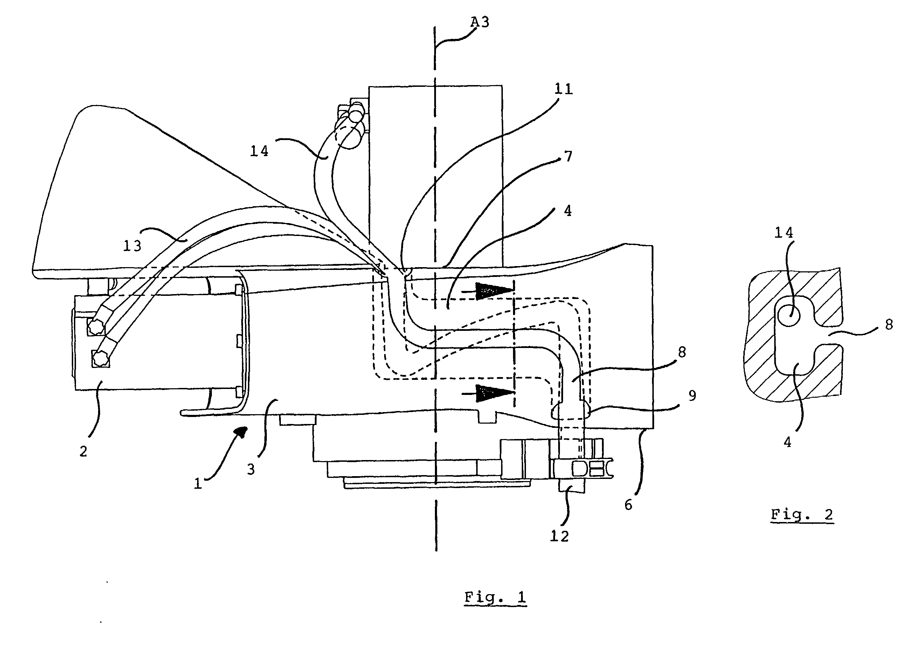

- Fig. 1: eine Draufsicht auf einen erfindungsgemäß mit einem Kabelführungskanal ausgebildeten Roboterarm; und
- Fig. 2: einen Schnitt entsprechend II-II.

Bei dem dargestellten erfindungsgemäß ausgebildeten Roboterarm 1 handelt es sich um den um die horizontale Achse A3 eines Roboters verschwenkbaren, Handachsenmotoren 2 tragenden Roboterarm. Auf der Oberseite 3 des Roboterarms ist in dessen Gehäuse ein Kabelführungskanal 4 ausgebildet, der von dem vorderen, den Handachsenmotoren 2 abgewandten Bereich einer Längsseite 6 des Roboterarms 1 S-förmig nach hinten, d.h. auf die Handachsenmotoren 2 zu zur anderen Seite 7 des Roboterarms verläuft. Die Haupterstreckungsrichtung des Kanals 4 erstreckt sich im wesentlichen in der Längsrichtung des Roboterarms 1. Der Kabelführungskanal 4 ist auf seiner Oberseite mit einer schlitzartigen Öffnung 8 ausgebildet, die über die gesamte Länge des Kabelführungskanals 4 verläuft. Die Öffnung 8 weist verbreiterte Enden 11, 9 an den an den Längsseiten 6, 7 liegenden Enden des Kabelführungskanals 4 auf.

Vom Sockel des Roboters zu den Handachsenmotoren 2 sowie zu dem den Roboterarm 1 um die Achse A3 bewegenden Motor 12 führende Kabel 13, 14 können leicht und bequem seitlich durch den Schlitz 8 in den Kabelführungskanal eingelegt werden. Dadurch, daß die Querabmessungen des Kabelführungskanals 4 größer sind als die der Kabel 13, 14 bzw. der Gesamtheit dieser Kabel, kann der Kabelführungskanal einen Stauraum für Kabelüberlängen bilden, diese aufnehmen und voll ausgleichen. Dennoch liegen die Kabel im Kabelführungskanal 4 geschützt.

## Patentansprüche

1. Roboterarm, insbesondere Handachsenmotoren tragender Roboterarm, mit einem Kabelführungskanal (4), der sich im wesentlichen längs des Roboterarms (1) erstreckt und über seine gesamte Länge mit einer seitlichen Öffnung (8) versehen ist, **dadurch gekennzeichnet, daß** die Breite der seitlichen Öffnung (8) geringer ist als die entsprechende Querabmessung des Kabelführungskanals (4).

2. Roboterarm nach Anspruch 1, **dadurch gekennzeichnet, daß** der Kabelführungskanal (4) S-förmig ausgebildet ist.

3. Roboterarm nach Anspruch 1 oder 2, **dadurch gekennzeichnet, daß** der Kabelführungskanal von einer Längsseite (6) des Roboterarms (1) zur anderen Längsseite (7) verläuft .

4. Roboterarm nach Anspruch 3, **dadurch gekennzeichnet, daß** der Kabelführungskanal von einem vorderen Bereich der Längsseite (6) des Roboterarms (1) zu einem rückwärtigen Bereich der Längsseite (7) des Roboterarms (1) verläuft.

5. Roboterarm nach einem der vorangehenden Ansprüche, **dadurch gekennzeichnet, daß** der Querschnitt des Kabelführungskanals (4) größer ist als der Querschnitt der aufzunehmenden Kabel (13, 14).

## Claims

1. Robot arm, particularly a robot arm carrying hand axis motors, having a cable duct (4) extending essentially along the robot arm (1) and provided over its entire length with a lateral opening (8), **characterized in that** the width of the lateral opening (8) is smaller than the corresponding transverse dimension of the cable duct (4).

2. Robot arm according to claim 1, **characterized in that** the cable duct (4) is S-shaped.

3. Robot arm according to claim 1 or 2, **characterized in that** the cable duct runs from one longitudinal side (6) of the robot arm (1) to the other longitudinal side (7).

4. Robot arm according to claim 3, **characterized in that** the cable duct runs form the front area of the longitudinal side (6) of the robot arm (1) to a rear area of the longitudinal side (7) of the robot arm (1).

5. Robot arm according to one of the preceding claims, **characterized in that** the cross-section of the cable duct (4) is larger than the cross-section of the cables (13, 14) to be received.

## Revendications

1. Bras de robot, en particulier bras de robot porteur de moteurs d'axe de main, comprenant une goulotte (4) de guidage de câbles s'étendant sensiblement le long du bras de robot (1) et présentant sur la totalité de sa longueur une ouverture latérale (8), **caractérisé en ce que** la largeur de l'ouverture latérale (8) est inférieure à la dimension transversale correspondante de la goulotte (4) de guidage de câbles.

2. Bras de robot selon la revendication 1, **caractérisé en ce que** la goulotte (4) de guidage de câbles est conformée en "S".

3. Bras de robot selon la revendication 1 ou 2, **caractérisé en ce que** la goulotte de guidage de câbles s'étend d'un grand côté (6) du bras de robot (1) à l'autre grand côté (7).

4. Bras de robot selon la revendication 3, **caractérisé en ce que** la goulotte de guidage de câbles s'étend d'une zone avant du grand côté (6) du bras de robot (1) à une zone arrière du grand côté (7) du bras de robot (1).

5. Bras de robot selon l'une quelconque des revendications précédentes, **caractérisé en ce que** la section de la goulotte (4) de guidage de câbles est supérieure à la section des câbles (13,14) devant y être logés.
